# EUROPEAN PATENT APPLICATION

(11) **EP 4 328 995 A1**
(43) Date of publication of application: **28.02.2024**
(21) Application number: 23192762.5
(22) Date of filing: 22.08.2023
(51) Int. Cl.: H01M 4/13, H01M 4/136, H01M 4/137, H01M 4/36, H01M 4/40, H01M 4/52, H01M 4/62, H01M 10/04, H01M 10/054, H01M 4/02

(54) **PRUSSIAN BLUE ANALOGUE CATHODE MATERIALS AND ELECTROCHEMICAL ENERGY STORAGE DEVICES**

(30) Priority: 24.08.2022 CN 202211015703
(71) Applicant: Zonke Seno Technology Co., Ltd., Suzhou City, Jiangsu Province 215400 (CN)
(72) Inventor: Tian, Jianliya, Suzhou City, 215400 (CN); Shen, Jianhui, Suzhou City, 215400 (CN); Shao, Siwei, Suzhou City, 215400 (CN); Wang, Xiongtao, Suzhou City, 215400 (CN)
(74) Representative: Bryn Aarflot AS

(57) **Abstract**

A Prussian blue positive electrode material and an electrochemical energy storage device, which consists of a positive electrode, a negative electrode, a separator between the two and an electrolyte with ionic conductivity. The positive electrode is composite of Prussian blue compounds and conductive carbon materials, the negative electrode is composite of polyanionic sodium storage materials and conductive carbon materials, the electrode is porous self-supporting thick electrode with the active material load of 0.001-0.2g /cm², thickness of 0.1-2 mm, and porosity of 15-60%. Battery capacity is controlled by the negative electrode. The electrolyte is an aqueous solution containing metallic sodium ions, an organic electrolyte, or a mixture of both.

## Description

### Technical Field

The invention relates to the field of secondary energy storage batteries. In particular, this invention relates to a Prussian blue analog cathode material, a preparation method thereof, and an electrochemical energy storage battery.

### Background of the Invention

In large-scale electrochemical energy storage systems, long-life, low-cost, environment-friendly rechargeable batteries are an important developing direction. Among the numerous cathode materials for sodium ion batteries, Prussian blue analogues have high specific capacity, long cycle life and excellent magnification performance because of their unique three-dimensional open frame structure without oxygen lattice, which can achieve rapid and reversible deinterlacing of sodium ions. At the same time, their raw material resources are rich, the price is low, and the synthesis process is easy to scale, so they have great practical application potential.

As early as 2012, Goodenough et al. (1) synthesized a series of Prussian blue analogues KMFe (CN) ₆ (M=Mn, Fe, Co, Ni, Cu, Zn, etc.) by a simple coprecipitation method, and studied their performance in organic sodium ion batteries, which opened the prelude to the application of Prussian blue analogues in sodium ion batteries. Patent CN108946765B also mentions a kind of Prussian blue analog cathode material, its preparation method and electrochemical energy storage device. The technical difficulty it solves is how to reduce or even remove the content of coordination water in the material synthesis process, so as to significantly improve the performance of the electrochemical energy storage device. However, similar studies often focus on the preparation of materials and organic solution systems. However, in aqueous electrolytes, Prussian blue analogues face greater challenges: a) the stability of materials; b) Preparation of electrodes with high load; Starting from the above key problems, the invention puts forward a targeted solution, which completes the battery design with Prussian blue analogues as cathode materials, and achieves high rate, long cycle battery performance.

Through the aqueous solution coprecipitation method, by doping the organic and inorganic carbon materials in situ, controlling the titration reaction rate of the process, the crystal growth size of the material is controlled. The problems of low specific capacity and poor rate performance of sodium ion battery caused by structural defects, vacancies, coordination water are solved.

In the process of electrode preparation, the porous self-supporting thick electrode can effectively solve the problem of low surface load caused by low compaction density of powder. Through vacuum drying or inert gas protection, the active material components of the powder can be prevented from being oxidized during the drying process, so as to ensure the consistency and stability of materials in the large-scale production process.

### Summary of the Invention

The invention relates to a rechargeable sodium ion battery based on a Prussian blue analog, which is composed of a positive electrode, a negative electrode, a separator between the two, and an electrolyte with ionic conductivity. It is characterized in that the positive electrode is a composite of Prussian blue compounds and conductive carbon, the negative electrode is a composite of polyanion sodium storage materials and conductive carbon, and the electrolyte uses an aqueous solution containing metal salt ions, an organic electrolyte, or a mixture of the two. Specifically, it includes the preparation process of Prussian blue analog materials, electrode preparation and design of electrochemical energy storage device

According to the characteristics of the Prussian blue analog coprecipitation synthesis process, the present invention involves different concentrations of solvents and additives in the reaction process, which is essentially different from the later mechanical mixing of carbon powder. This method can change the problem of poor conductivity of Prussian blue analog from the nature of the material. At the same time, in the process of titration reaction, by controlling the stirring speed and titration time, the structural of the crystal micro morphology after reaction can be designed to further expand the performance of Prussian blue analog powder, including but not limited to the compaction density of the powder, particle size, the wetting effect of electrolyte, etc.

In the process of electrode preparation, according to the comprehensive characteristics of Prussian blue analog powder, a porous self-supporting thick electrode is designed, which is fabricated by wet tape casting, dry method or semi-dry method. The atmosphere is protected to prevent the oxidation and reduction of material activity during the process, so as to achieve a high load of active material, a high mechanical strength, high wettability and conductivity of the electrode. The capacity ratio of positive and negative active materials is 1:1 to 2:1, and the battery capacity is controlled by the negative electrode.

### Description of the Drawings

Figure 1: Synthesis route of Prussian blue analogue powder.
Figure 2: SEM microscope of Prussian blue analogue.
Figure 3: Rate capability and long cycle test of Prussian blue analogue.
Figure 4: Comparison of EIS impedance of diaphragms with different electrode thickness.
Figure 5: Cycle performance of battery with different ratios of active materials.

### Detailed Description of the Invention

Features and advantages of the existing invention patent: Compared with the traditional coprecipitation titration method, the synthesis route designed in this invention has clear advantages in the final product crystal integrity, particle size controllability, electrolyte wetting optimization and electronic conductivity improvement, etc. The electrode structure in the micro morphology can be designed and controlled in the preparation process.

Compared with the traditional coating method, the porous self-supporting thick electrode designed in the patent of the present invention has a wider range of electrode dimensions (thickness), so that it has a higher active material load under the same area, thus achieving higher energy density. Moreover, the process is simple and controllable, and has the commercial potential of continuous production. This designed electrode can be used in water system, organic and mixed electrolyte systems.

Literature or published articles are cited in this patent application. The cited literature and published articles are jointly used as the reference data of the application, so as to describe the latest level in the field related to the invention in more detail. At the same time, it should be noted that in the entire application process, the transitional terms "including", "comprising" or "characterized by" are synonyms, inclusive or open, and do not exclude additional, unlisted elements or method steps.

The invention can be better understood by referring to the following embodiments. Those skilled in the art can understand that the following examples are only for explaining the invention, not for limiting the scope of the invention. The scope of the invention is defined by the scope of patent application hereinafter.

### Examples

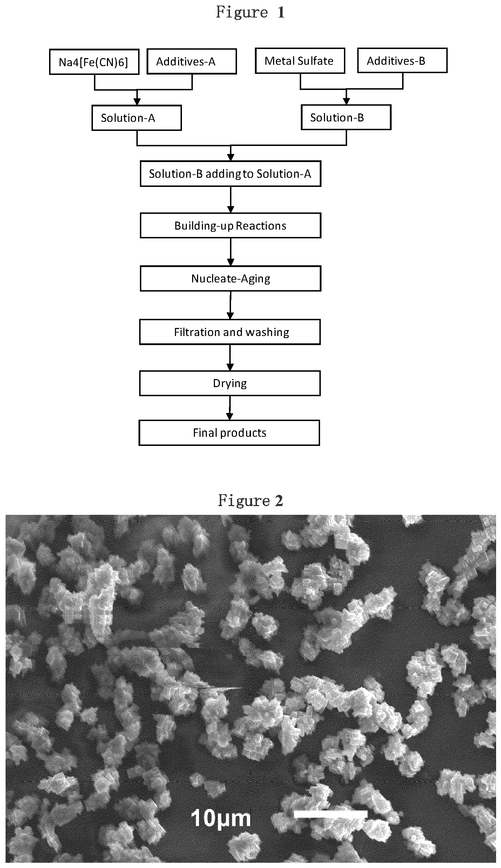

**Example** 1. Dissolve 0.5mol of sodium ferrocyanide decahydrate and 0.5mol of sodium citrate in 1L deionized water to obtain precursor A; Dissolve 0.5mol manganese sulfate tetrahydrate and 10g sucrose in 1L deionized water, add 10g acetylene black, after dispersing and stirring, precursor B is obtained; Then, add precursor B is added into precursor A at rate of 50ml/min, meantime inject high-purity nitrogen into the reactor. The nitrogen flow rate is controlled at 0.5L/min, the reactor stirring speed is controlled at 200r/min, and the reactor temperature is kept at 60 °C. After the titration reaction is completed and stirred for 1 hour, it is allowed to stand and age for 24 hours; The suspended liquid in the static aging kettle is filtered to get the sediment, and the sediment is washed twice with deionized water and anhydrous ethanol. Dry the washed sediment at a vacuum of 100pa and a temperature of 80 °C for 12h to obtain the Prussian blue analog sodium ion battery cathode material (see Figure 2 for the electron microscope).

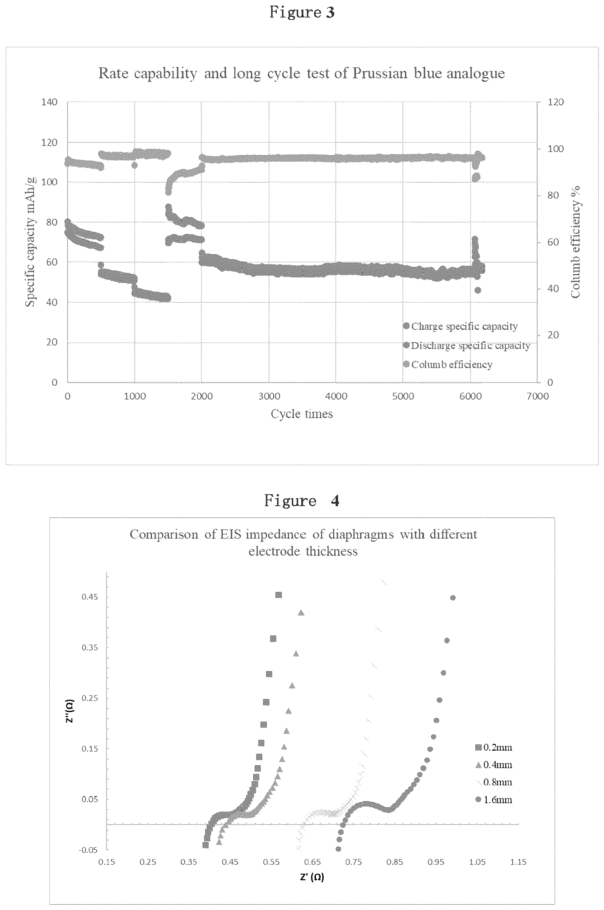

Grind and crush 75g of the obtained Prussian blue analog powder, add 10g of conductive agent graphite acetylene black, place it in a 500ml agate tank, add 100g of 5mm diameter zirconia ball mill beads, use planetary ball mill for mechanical mixing, control the rotational speed of planetary ball mill to 350r/min, add 5g of dry powder polytetrafluoroethylene as the binder after 60 minutes of mixing, and use V-shaped mixer for further mixing for 30min, Then, the mixed dry powder is crushed by air flow to grind the fiber for spinning, and the fluffy powder is obtained. The powder is added to the feed port of the roller press at the speed of 500ml/min. The diameter of the roller is 300mm. A certain distance between the rollers is set, and the temperature of the roller is 180 °C. After the powder is fed, the film is rolled continuously and the thickness of the film is controlled to be 500 µm. After continuous film forming, it is further rolled and compounded with carbon coated aluminum foil, and the composite roller temperature is set at 120 °C to obtain the positive film compounded with the collector. The negative electrode uses sodium titanium phosphate as the active material, graphite activated carbon as the conductive agent, and polytetrafluoroethylene as the binder. The negative electrode film is formed continuously by the same ratio and preparation process as the positive electrode. A 6cm * 6cm small single cell was assembled by using 1.0 mol/L NaClO4 aqueous solution mixed with polyethylene glycol as electrolyte and non-woven fabric as diaphragm. Use 1C/2C/3C to cycle for 500 cycles respectively, and then use 2C for long cycle test. The test results are shown in Figure 3.

**Example 2.** Dissolve 0.5mol of sodium ferrocyanide decahydrate and 0.5mol of sodium citrate in 1L deionized water to obtain precursor A; Dissolve 0.5mol manganese sulfate tetrahydrate and 10g sucrose in 1L deionized water, add 10g acetylene black, after dispersing and stirring, precursor B is obtained; Then, adding precursor B into precursor A at rate of 50ml/min, and fill the reactor with high-purity nitrogen. The nitrogen flow rate is controlled at 0.5L/min, and the stirring speed of the reactor is controlled at 400r/min, meanwhile the temperature of the reactor is kept at 60 °C. After the titration reaction is completed and then stirred for 0.5 hour, it is allowed to stand and age for 48 hours; The suspended liquid in the static aging kettle is filtered to get the sediment, and the sediment is washed twice with deionized water and anhydrous ethanol. After washing, the precipitate is dried at a vacuum of 100pa and a temperature of 150 °C for 8 hours to obtain the Prussian blue analog sodium ion battery cathode material.

Grind and crush 75g of the obtained Prussian blue analog powder, add 10g of conductive agent graphite acetylene black and 30g of deionized water respectively, place them in a 500ml agate tank, add 100g of 5mm diameter zirconia ball mill beads, use planetary ball mill to mix mechanically, control the rotational speed of planetary ball mill to 350r/min, add 10g of PTFE lotion after mixing evenly, stir for no more than 30min after mixing evenly, and obtain uniform blocky micelles. The obtained homogeneous micelles are further rolled into different electrode thicknesses with a roller press, using 1.0mol/L NaClO₄ aqueous solution as the electrolyte, non-woven fabric as the separator, and 50 µ m stainless steel as the collecting fluid to assemble a 6cm * 6cm symmetrical battery, and the electrode membrane impedance under different thicknesses is tested as shown in Figure 4.

**Example 3.** The preparation method of Prussian blue analog sodium ion battery cathode material is the same as that in Example 1.

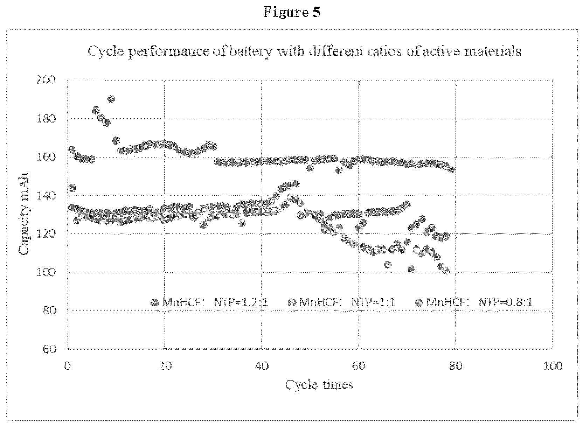

Grind and crush 75g of the obtained Prussian blue analog powder, adding 10g of conductive agent graphite acetylene black, place it in a 500ml agate tank, add 100g of 5mm diameter zirconia ball milling beads, use planetary ball milling machinery to mix, control the rotational speed of planetary ball milling to 350r/min, add 200g of NMP solvent after mixing evenly, add 5g of PVDF dry powder after mixing for 2h, and then ball mill for another 4h, Then, the mixed slurry is vacuumed, and poured into the slit coater feed system, and the coating thickness is controlled by adjusting the scraper gap. After vacuum dried, the positive electrode of 200-400 microns thick is obtained. The negative electrode uses sodium titanium phosphate as the active material, and uses the same mixing and coating process as the positive electrode to obtain the negative electrode compounded with the anti-corrosion collector. The 6cm * 6cm single cell is assembled using 1.Omol/L NaPF₆ dimethyl carbonate as the electrolyte and non-woven fabric as the diaphragm. The electrochemical performance of the cell under different active substance ratios is tested as shown in Figure 5. It can be seen from the figure that when the ratio of positive and negative active materials is less than 1, the cycle performance of the battery is poor. When the ratio of positive and negative active materials is 1.2:1, the capacity and cycle stability of the battery are greatly improved.

### References

(1) Y.H.Lu, L.Wang, J.G. Cheng, J.B.Goodenough; "Prussian blue: a new framework of electrode materials for sodium batteries"; Chemical Communications, 2012, 48(52): 6544-6546.

## Claims

1. A sodium ion battery, comprising a positive electrode, a negative electrode, a separator between said positive electrode and said negative electrode, and an electrolyte with ionic conductivity, wherein the positive electrode is a composite of Prussian blue compounds and conductive carbon materials, the negative electrode is a composite of polyanionic sodium storage materials and conductive carbon materials, and the electrode is porous self-supporting thick electrode with active material load of 0.001-0.2g /cm², thickness of 0.1-2 mm, porosity of 15-60%, wherein capacity of said sodium ion battery is controlled by the negative electrode, and the electrolyte is an aqueous solution containing metallic sodium ions, an organic electrolyte, or a mixture of both.

2. The sodium ion battery according to claim 1, wherein the formula of Prussian blue compounds is AₓM1_{c}[M2(CN)₆]y·zH₂O, wherein A is one or more of Li, Na, K, Ca, Mg, Zn, and Al; M1 and M2 are each one or more of Fe, Co, Ni, Cu, Zn, Ti, V, Cr and Mn; 1 < *x* ≤ 2, 0 < *y* ≤ 1, 0 < *c* ≤ 1, 0 < *z* ≤ 16.

3. The sodium ion battery according to claim 1 or 2, wherein the negative electrode material comprises a mixture of polyanion sodium storage material and conductive carbon, and the polyanion sodium storage material is selected from Na₃V₂(PO₄)₃ and Na₂VTi(PO₄)₃ of NASICON structure, NaFePO₄ with olivine structure, and NaCo1/3Ni1/3 Mn1/3PO₄.

4. The sodium ion battery according to claim 1 or 2, wherein the positive electrode and negative electrode are added with conductive carbon source and a binder, wherein the carbon source is one or more of artificial graphite, natural graphite, acetylene black, Super P, activated carbon, graphene, carbon fiber, and mesoporous carbon, and the binder is one or more of polyethylene butyral, polyacrylic acid, polyurethane, cellulose, polytetrafluoroethylene and polyvinylidene fluoride.

5. The sodium ion battery according to claim 1 or 2, wherein the electrolyte salt containing sodium ions is one or more of Na₂SO₄, NaCl, NaNO₃, Na₃PO₄, Na₂HPO₄, NaH₂PO₄, NaC₂H₃O₂, Na₂C₂O₄, NaClO₄, and NaPF₆, with a concentration of 0.1-10 mol/L, and the solvent is water, organic electrolyte or a mixture of both, wherein the organic electrolyte is selected from polyols, carbonates, ethers, hydroxy acid esters, polyethylene glycol, polypropylene glycol, polyvinyl alcohol ethylene carbonate, dimethyl carbonate, methyl ethyl carbonate, methyl format, methyl acetate, methyl butyrate, and diethylene glycol dimethyl ether.

6. The sodium ion battery according to claim 1, wherein the capacity ratio of positive to negative active material is 1.1-2.0:1, and the battery capacity is controlled by the negative electrode.

7. The sodium ion battery according to claims 1 or 2, wherein the electrode is flexible porous self-supporting thick electrode, wherein active material loading is 0.001 - 0.2 g/cm²; thickness is 0.1-2 mm; porosity is 15-60%; tensile strength is 0.2-1 MPa; tensile elongation at break is 0-5%; volume resistivity is 0.6-10 Ω ^{∗} cm; and acid-base tolerance is within pH=2-13.

8. The sodium ion battery according to claim 1, wherein the thickness of the positive electrode is 0.1-2 mm, and the thickness of the negative electrode is 0.1-2 mm, the carbon source is one or more of artificial graphite, natural graphite, acetylene black, Super P, activated carbon, graphene, carbon fiber, and mesoporous carbon, and the binder is one or more of polyethylene butyral, polyacrylic acid, polyurethane, cellulose, polytetrafluoroethylene and polyvinylidene fluoride.

9. The sodium ion battery according to claim 1, wherein the electrolyte salt containing sodium ions is one or more of Na₂SO₄, NaCl, NaNO₃, Na₃PO₄, Na₂HPO₄, NaH₂PO₄, NaC₂H₃O₂, Na₂C₂O₄, NaClO₄, and NaPF₆, with a concentration of 0.1-10 mol/L, and the solvent is water, organic electrolyte or a mixture of both, wherein the organic electrolyte is selected from polyols, carbonates, ethers, hydroxy acid esters, polyethylene glycol, polypropylene glycol, polyvinyl alcohol ethylene carbonate, dimethyl carbonate, methyl ethyl carbonate, methyl format, methyl acetate, methyl butyrate, and diethylene glycol dimethyl ether.

10. The sodium ion battery according to claim 1, wherein the separator layer is one or more of microporous polyolefin membrane, non-woven membrane, nanofiber membrane and cellulose membrane paper.

11. A method for preparing in-situ carbon coated Prussian blue analog as positive electrode powder for use in aqueous sodium ion batteries, comprising:
1) Preparing solution A and solution B, wherein solution A contains transition metal cyanide compounds and additives, and solution B contains a sulfate or citrate solution of metal ions ;
2) Taking A as the mother liquor of the reaction kettle, titrating the prepared solution B into solution A, and conducting coprecipitation reaction under the protection of nitrogen;
3) Stirring the obtained product in a kettle, wherein the crystal morphology and particle size of the reaction product are controlled according to the stirring speed and aging time, and the product is further aged for 2-24 hours after the reaction is completed;
4) Filtering and separating a solid liquid mixture after reaction, washing and removing impurities with pure water, and drying and collecting a solid of Prussian blue analog; and
5) Mixing the collected Prussian blue analog with conductive agent and other powders to prepare positive electrode powder for use in aqueous sodium ion battery, with active material loading of 0.001 - 0.2 g/cm²; and porosity of 15-60%, wherein the general formula of the Prussian blue analog is AₓM1_{c}[M2(CN)₆]y·zH₂O, in which A is one or more of Li, Na, K, Ca, Mg, Zn, and Al, M1 and M2 are each one or more of Fe, Co, Ni, Cu, Zn, Ti, V, Cr, and Mn, 1 < *x* ≤ 2, 0 < *y* ≤ 1, 0 < *c* ≤ 1, 0 < *z* ≤ 16.

12. The method according to claim 11, wherein the concentration of the solution A is 0.1-2 mol/L, containing soluble sodium salt and soluble transition metal cyanide compound, wherein the soluble transition metal cyanide compound is any one or more of Na₄Fe(CN)₆, Na₄Co(CN)₆, Na₄Cu(CN)₆, Na₄Zn(CN)₆ and Na₄Mn(CN)₆, and the solution A contains an additive which is one or more of sodium sulfate, sodium nitrate, sodium chloride, sodium citrate and sodium oxalate.

13. The method according to claim 11, wherein the concentration of solution B is 0.1-2.0mol/L, and the metal ions are one or more of Fe²⁺, Cu²⁺, Zn²⁺, Mn²⁺, Co²⁺ and Ni²⁺ .

14. The method according to claim 11, wherein solution B contains an additive which is an inorganic carbon source and an organic carbon source, wherein the inorganic carbon source includes one or more of artificial graphite, natural graphite, acetylene black, Super P, active carbon, graphene, carbon fiber, and mesoporous carbon, and the organic carbon source includes one or more of glucose, fructose, sucrose, maltose, agarose, and soluble starch.

15. The method according to claim 14, wherein the coprecipitation reaction is performed by adding solution B drop by drop to the solution A, wherein the coprecipitation reaction takes place for 1-4 hours at a rotational speed of 50-800 r/min and a temperature of 40-90 °C until a Prussian blue material suspension is obtained.

16. The method according to claim 15, wherein the Prussian blue material suspension is subject to aging reaction for 2-24 hours, the temperature is reduced to 10-70 °C so that organic sugar crystals are precipitated and coated on the surface of the Prussian blue material, and inorganic carbon source is deposited between particles of the Prussian blue material; and during the aging process, the particle size and crystal morphology of the material are changed and continuously increased to 20 µm.

17. The method according to claim 11, wherein inert gas is used for protection during the whole preparation process, said inert gas being high-purity nitrogen or argon; and the drying is performed at 50-150 °C.
